# EUROPÄISCHE PATENTSCHRIFT

(11) **EP 0 718 585 B1**
(45) Veröffentlichungstag und Bekanntmachung des Hinweises auf die Patenterteilung: **15.04.1998**
(21) Anmeldenummer: 95120050.0
(22) Anmeldetag: 19.12.1995
(51) Int. Cl.: F41G 1/34, F41G 1/38

(54) **Zielfernrohr mit leuchtendem Absehen**
Riflescope with illuminated reticle
Lunette de visée avec réticule illuminée

(30) Priorität: 20.12.1994 DE 9429382 U
(43) Veröffentlichungstag der Anmeldung: 26.06.1996
(73) Patentinhaber: SWAROVSKI OPTIK KG, 6067 Absam (AT)
(72) Erfinder: Pernstich, Ludwig Dipl.-Ing., 6064 Rum (AT)
(74) Vertreter: Kador & Partner

(56) Entgegenhaltungen:
- CH-A- 38 696
- DE-A- 1 915 207
- DE-A- 3 210 834
- DE-C- 51 205
- GB-A- 2 068 584
- US-A- 2 430 469

## Beschreibung

Die Erfindung bezieht sich auf ein Zielfernrohr mit einem leuchtenden Absehen.

Bei Jagdwaffen werden Zielfernrohre verwendet, die mit verschieden gestalteten Absehen ausgerüstet sind. Beim Jagen in der Morgen- oder Abenddämmerung ist oft das Absehen auf dem dunklen Wildkörper nicht zu erkennen. Dafür sind verschiedene Lösungen zur Beleuchtung der Absehen gefunden worden wie z.B. gemäß der DE-A- 1 915 207. Meist wird eine Strichplatte mit eingeätztem Absehen ganz oder teilweise zum Leuchten gebracht. Auch mit Glasfasern sind Lösungen im Gebrauch.

Wird das Absehen in eine Glasplatte geätzt und die mit einem reflektierenden Medium ausgefüllte Einätzung von einer Lichtquelle zum Leuchten gebracht, tritt aus der Strichplatte Licht aus. Dieses unerwünschte Licht kann das Zielbild überstrahlen und ist für den Verwender störend. Ebenso wird durch die Glasplatte der Transmissionsgrad des Zielfernrohres herabgesetzt und damit dessen Leistung in der Dämmerung verringert. Wird auf das Absehen eine Glasfaser als Lichtleiter aufgebracht, muß diese so ausgerichtet und befestigt werden, daß der Punkt des austretenden Lichtes genau am Zielpunkt liegt. Das feine Ausrichten stellt dabei hohe Anforderungen an den Ausführenden.

Aufgabe der Erfindung ist es, ein in der Herstellung einfaches leuchtendes Absehen ohne Überstrahlungen und störende Reflexe bereitzustellen.

Dies wird erfindungsgemäß mit dem im Anspruch 1 angegebenen Zielfernrohr erreicht. In den Unteransprüchen sind vorteilhafte Ausgestaltungen der Erfindung wiedergegeben.

Nach der Erfindung wird das Absehen aus einer Scheibe aus transparentem Material herausgearbeitet, insbesondere aus Glas. Das Herausarbeiten des transparenten Materials aus der Scheibe kann durch Schneiden, Schleifen und/oder Ätzen erfolgen.

Dabei kann das gesamte Material herausgearbeitet werden, so daß ein Gerippe aus den Balken des Absehens sowie ein dem Umfang der Scheibe entsprechender Ring zurückbleibt, der die Balken einstückig trägt. Ein solches Gerippe kann dann gegebenenfalls auf einer Scheibe aus transparentem Material, also insbesondere Glas, durch Aufkleben befestigt werden. Es ist jedoch auch möglich, das Material nur zum Teil herauszuarbeiten, also abgesehen von dem dem Umfang der Scheibe entsprechenden Ring und den Balken des Absehens, die Schichtdicke der Scheibe zu reduzieren.

Das durch Herausarbeiten des transparenten Materials aus der Scheibe hergestellte Absehen bildet einen Lichtleiter, z.B. mit rechteckigem Querschnitt, ist also in der Wirkung ähnlich einer Glasfaser. Bestimmte Bereiche, wie der Ring und Teile der Balken, können mit einer lichtundurchlässigen Schicht versehen werden, um ein Überstrahlen und störende Reflexe auszuschließen.

Nachstehend ist eine Ausführungsform des erfindungsgemäßen Absehens anhand der Zeichnung erläutert. Darin zeigen:
Figur 1 eine Draufsicht auf ein Absehen; und
Figur 2a und 2b sowie Figur 3a und Figur 3b den Bereich der Spitze eines gegenüber Figur 1 stark vergrößert wiedergegebenen Balkens, jeweils in der Draufsicht und in der Seitenansicht nach einer ersten und einer zweiten Variante.

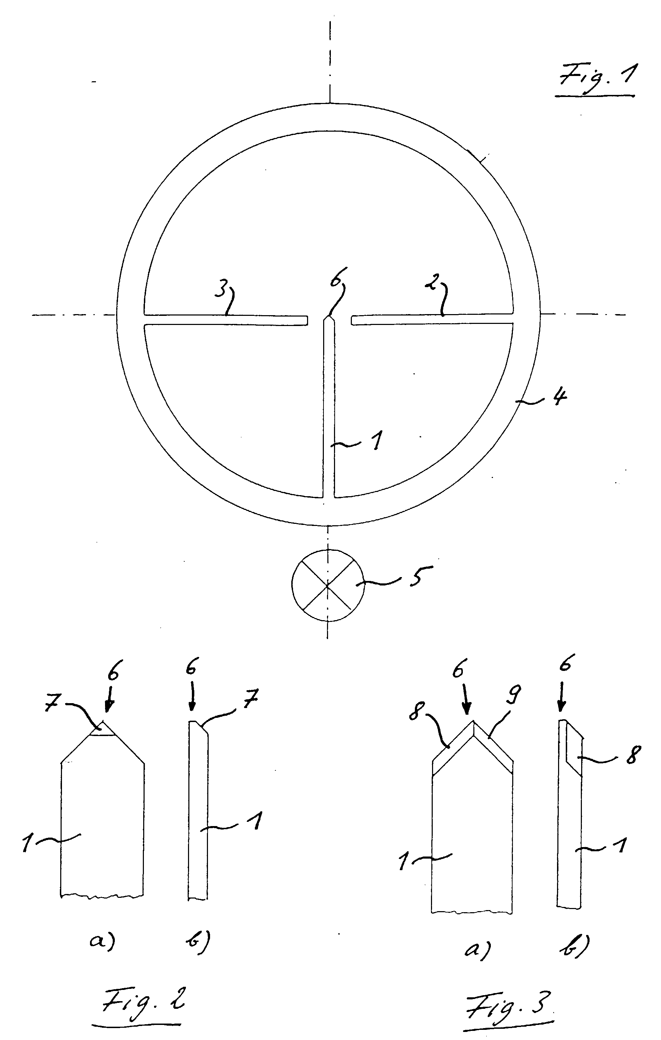

In Figur 1 ist ein Absehen dargestellt, das von den meisten Herstellern als "Absehen Nummer EINS" bezeichnet wird. Das Absehen besteht aus dem mittleren senkrechten Glasbalken 1 mit der Spitze 6 und den Glasquerbalken 3 und 4. Die radial verlaufenden Balken 1 bis 3 sind einstückig mit einem Glasring 4 verbunden, der die Außenkontur des Absehens bildet.

Der Glasring 4 mit den Glasbalken 1 bis 3 wird aus einer Glasscheibe herausgearbeitet. Das heißt, das Material der Glasscheibe zwischen den Balken 1 bis 3 und dem Ring 4 wird z.B. durch Herausschneiden oder Ätzen entfernt, so daß der Ring 4 und die damit einstückig verbundenen Balken 1 bis 3 zurückbleiben.

Der Glasring 4 mit den Glasbalken 1 bis 3 bildet einen Lichtleiter, der sein Licht von einer Lichtquelle 5 empfängt, beispielsweise einer Lampe oder einer LED, welche den Ring 4 anstrahlt. Auch kann eine Glasfaser an den Ring 4 angeschlossen sein.

Wie aus Figuren 2a und 2b hervorgeht, ist die Spitze 6 des Balkens 1 zu einer dreieckigen Fläche 7 abgeschliffen, die das über den Ring 4 in den Balken 1 geleitete Licht der Lichtquelle 5 zum Betrachter hin reflektiert bzw. streut, so daß die Fläche 7 als Zielmarke aufleuchtet.

Bei der Variante nach Figuren 3a und 3b ist die Spitze 6 in entsprechender Weise an ihrer Außenkante zu den Flächen 8 und 9 abgeschliffen, durch die das Licht zu dem Betrachter als Zielmarke in Form eines Pfeiles reflektiert bzw. gestreut wird.

## Patentansprüche

1. Zielfernrohr mit einer Lichtquelle (5) zum leuchtenden Absehen, dadurch gekennzeichnet, daß das Absehen, das Balken (1 bis 3) sowie einen den Umfang der Scheibe entsprechenden Ring (4) umfaßt, aus einer Scheibe aus transparentem Material gearbeitet ist und bei Beleuchtung durch die Lichtquelle (5) einen Lichtleiter bildet.

2. Zielfernrohr nach Anspruch 1, dadurch gekennzeichnet, daß die Lichtquelle (5) den Ring (4) anstrahlt.

3. Zielfernrohr nach einem der vorstehenden Ansprüche, dadurch gekennzeichnet, daß das Absehen wenigstens eine Fläche (7, 8, 9) aufweist, die das Licht der Lichtquelle (5) zum Betrachter reflektiert bzw. streut.

4. Zielfernrohr nach Anspruch 3, dadurch gekennzeichnet, daß die Reflektionsflächen (7, 8, 9) im Bereich der Spitze (6) wenigstens eines der Balken (1 bis 3) angeordnet ist.

5. Zielfernrohr nach Anspruch 4, dadurch gekennzeichnet, daß die Reflexion - bzw. Streuflächen (7, 8, 9) eine dreieckförmige Fläche als Leuchtzielmarke oder eine leuchtende Umrandung der Zielmarke bilden.

6. Zielfernrohr nach einem der vorstehenden Ansprüche, dadurch gekennzeichnet, daß Bereiche des Absehens zur Verhinderung der Lichtabstrahlung mit einer lichtundurchlässigen Schicht versehen sind.

## Claims

1. An aiming telescope with a light source (5) for a luminous reticle, characterized in that the reticle, which includes bars (1 to 3) and a ring (4) corresponding to the circumference of the disk, is worked out of a disk of transparent material and forms a light guide when illuminated by the light source (5).

2. The aiming telescope of claim 1, characterized in that the light source (5) illuminates the ring (4).

3. The aiming telescope of any of the above claims, characterized in that the reticle has at least one surface (7, 8, 9) which reflects or scatters the light from the light source (5) toward the viewer.

4. The aiming telescope of claim 3, characterized in that the reflecting surfaces (7, 8, 9) are disposed in the area of the tip (6) of at least one of the bars (1 to 3).

5. The aiming telescope of claim 4, characterized in that the reflecting or scattering surfaces (7, 8, 9) form a triangular surface as a luminous sighting mark or a luminous border around the sighting mark.

6. The aiming telescope of any of the above claims, characterized in that areas of the reticle are provided with an opaque layer to prevent reradiation of the light.

## Revendications

1. Lunette de visée comportant une source de lumière (5) pour le réticule éclairé, caractérisée en ce que le réticule, qui comporte des tiges (1 à 3) ainsi qu'un anneau (4) correspondant à la circonférence du disque, est formé par usinage à partir d'un disque formé d'un matériau transparent et, lors de l'éclairement par une source de lumière (5), forme un guide de lumière.

2. Lunette de visée selon la revendication 1, caractérisée en ce que la source de lumière (5) éclaire l'anneau (4).

3. Lunette de visée selon l'une des revendications précédentes, caractérisée en ce que le réticule comporte au moins une surface (7, 8, 9), qui réfléchit ou diffuse la lumière de la source de lumière (5) en direction de l'observateur.

4. Lunette de visée selon la revendication 3, caractérisée en ce que les surfaces réfléchissantes (7, 8, 9) sont disposées au voisinage de la pointe (6) d'au moins l'une des tiges (1 à 3).

5. Lunette de visée selon la revendication 4, caractérisé en ce que les surfaces réfléchissantes ou de diffusion (7, 8, 9) forment une surface triangulaire en tant que marque de visée d'éclairement ou contour éclairant de la marque de visée.

6. Lunette de visée selon l'une des revendications précédentes, caractérisée en ce que des parties du réticule servant à bloquer le rayonnement lumineux comportent une couche opaque.
